# EUROPEAN PATENT APPLICATION

(11) **EP 1 950 987 A1**
(43) Date of publication of application: **30.07.2008**
(21) Application number: 07100981.5
(22) Date of filing: 23.01.2007
(51) Int. Cl.: H04Q 7/32

(54) **Passively scanning according to WLAN regulatory domain**

(71) Applicant: Research In Motion Limited, Waterloo, Ontario N2L 3W8 (CA)
(72) Inventor: Abdel-Kader, Sherif, Waterloo N2K 4H7 (CA); Durand, Roger, Amherst, NH 03031 (US)
(74) Representative: Rickard, David John

(57) **Abstract**

A wireless local area network (WLAN) client device (110, 500) determines the WLAN regulatory domain (102, 104) in which it is currently located by using information received via a non-WLAN wireless interface (520, 530). Once the regulatory domain (102, 104) has been determined, a WLAN client device (110, 500) operating in the 5 GHz band, for example, an IEEE 802.11 a client device, may passively scan for wireless local area networks on channels in the 5 GHz band that are valid in the regulatory domain (102, 104) and may refrain from passively scanning on channels in the 5 GHz band that are not valid in the regulatory domain (102, 104).

## Description

There are two types of scanning that a wireless local area network (WLAN) client device may use to search for wireless local area networks to associate with. In ***passive scanning**,* the device generally listens for beacon frames broadcast by access points (APs), one communication channel at a time. The beacon frames include the service set identifier (SSID) of the WLAN being hosted by the AP. Since beacon frames are often broadcast at regular intervals of approximately 100 ms, the device typically has to "dwell" for about 105 ms per channel before assuming there are no APs on that channel and trying a different channel. In ***active scanning,*** the device transmits an active probe request on a communication channel on which the regulatory regulations allow active probing. The device may receive one or more probe responses from APs. The probe responses may be received within 15 ms of the transmission of the active probe request. If no probe response is received within that time, it is assumed that there are no APs on that channel and the device may try a different channel. This makes active scanning relatively fast.

IEEE 802.11b/g communications use the unlicensed 2.4 GHz band, and restrictions on some of the frequencies in that band are imposed by national and transnational authorities. Regulators include the Federal Communications Commission (FCC), the European Telecommunications Standards Institute (ETSI), and the Telecom Engineering Center (MKK or TELEC). For example, channels 12, 13 and 14 are used in Japan but are not allowed in the United States. Transmitting on channels 12, 13 and 14 is prohibited in the United States. An IEEE 802.1 lb/g client device passively scans until it receives a beacon frame from an AP that contains regulatory domain information embedded in an IEEE 802.11d information element. Once the regulatory domain is known, the allowed channels are known and the client device can start actively scanning on the allowed channels.

According to the IEEE 802.11 d standard: "A mobile station (STA) that is enabled for operation across regulatory domains shall default to passive scanning when it has lost connectivity with its extended service set (ESS). Passive scanning is performed using only the receive capabilities of the station and is, thus, compatible with regulatory requirements. When a STA enters a regulatory domain, it shall passively scan to learn at least one valid channel, i.e. a channel upon which it detects IEEE 802.11 frames. The beacon frame contains information on the country code, the maximum allowable transmit power, and the channels to be used for the regulatory domain. Optionally, the Beacon frame may also include, on a periodic basis, the regulatory information that would be returned in a Probe Response frame. Once the STA has acquired the information so that it is able to meet the transmit requirements of the regulatory domain, it shall transmit a Probe Request to an AP to gain the additional regulatory domain information contained in the Probe Response frame, unless the information was previously received in a Beacon frame. The STA then has sufficient information available to configure its PHY for operation in the regulatory domain." (IEEE 802.11d standard, sections 9.9 and 9.9.1)

IEEE 802.11a communications use the 5 GHz band, and different countries in the world have different valid 5 GHz channels. For example, Japan presently only has the 5.15 to 5.35 GHz band, while the European Union has both the 5.15 to 5.35 GHz band and the 5.47 to 5.725 GHz band. The United States will soon have three bands: 5.15 to 5.35 GHz, 5.725 to 5.85 GHz and 5.47 to 5.725 GHz. An IEEE 802.11a client device that is unaware of the regulatory domain in which it is located may waste energy passively scanning on channels that are not valid.

### OVERVIEW

A WLAN client device may determine the WLAN regulatory domain in which it is currently located by using information received via a non-WLAN wireless interface. Once the WLAN regulatory domain has been determined, a WLAN client device operating in the 5 GHz band, for example, an IEEE 802.11a client device, may refrain from passively scanning in the 5 GHz band on channels that are not valid for WLAN communications in the WLAN regulatory domain.

For example, the WLAN client device, if equipped with a cellular communications interface, may listen to the mobile country code (MCC) broadcast by base stations of a cellular network and determine the WLAN regulatory domain from the MCC. The WLAN client device, if equipped with a cellular communications interface, may receive from a base station of a cellular network other information from which the WLAN regulatory domain may be determined. For example, this other information may be a geographical location of the base station, or a cell ID.

In another example, the WLAN client device, if equipped with a global positioning system (GPS) receiver, may estimate its location from signals received by the GPS receiver and determine the WLAN regulatory domain from the estimated location.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:

FIG. 1 is an illustration of an exemplary communications environment;

FIGs. 2, 3 and 4 are flowcharts of exemplary methods for determining how to scan for wireless local area networks; and

FIG. 5 is a block diagram of an exemplary client device.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

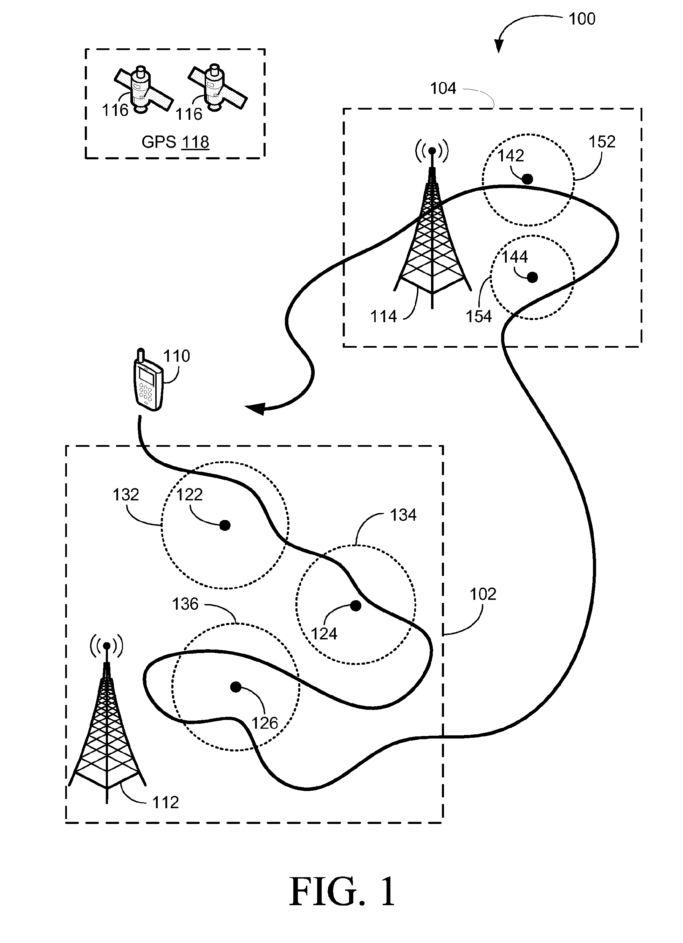

FIG. 1 is an illustration of an exemplary communications environment 100. FIG. 1 shows two different regulatory domains 102 and 104 for WLAN communications. A client device 110 travels with its user from WLAN regulatory domain 102, for example, the United States, to WLAN regulatory domain 104, for example, Japan.

Base stations 112 and 114 of one or more cellular networks in WLAN regulatory domains 102 and 104, respectively, may broadcast a mobile country code (MCC) corresponding to the WLAN regulatory domain. For example, an MCC for the United States is 310, and the MCC for Canada is 302. Some base stations of cellular networks broadcast, or provide in response to a request, a geographic location of the base station.

If client device 110 is equipped with a GPS receiver, client device 110 may be able to receive signals transmitted by satellites 116 (of which only two are shown) of a GPS satellite system 118. Client device 110 may be able to estimate its longitude and latitude coordinates from signal received from satellites 116.

APs 122, 124 and 126 having coverage areas 132, 134 and 136, respectively, are located within WLAN regulatory domain 102. As client device 110 travels through WLAN regulatory domain 102, it scans for and may associate with APs 122, 124 and 126. APs 142 and 144, having coverage areas 152 and 154, respectively, are located within WLAN regulatory domain 104. As client device 110 travels through WLAN regulatory domain 104, it scans for and may associate with APs 142 and 144.

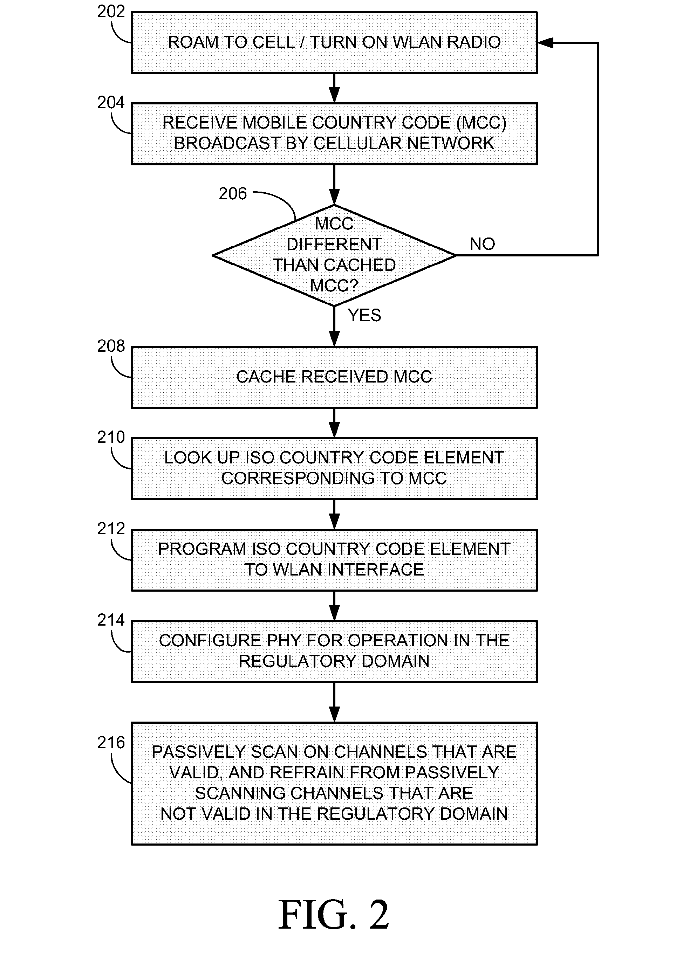

FIG. 2 is a flowchart of an exemplary method for determining how to scan for wireless local area networks. This method may be implemented in a WLAN client device equipped with a cellular communications interface. At 202, the device roams to a cell of a cellular network, or while in a cell of a cellular network, the device's WLAN radio is turned on. At 204, the device receives the MCC broadcast by a base station of the cellular network. At 210, the device looks up the International Organization of Standardization (ISO) country code element corresponding to the MCC received at 204. Each country name in English as given in ISO 3166-1 has a corresponding ISO 3166-1-alpha-2 code element. For example, the code elements for Canada, the United States of America and Japan, are CA, US and JP, respectively. A lookup table linking mobile country codes to ISO country code elements may be stored in the device's memory.

At 212, the device programs the ISO country code element to its WLAN interface, and at 214, the device configures its physical layer (PHY) for operation in the WLAN regulatory domain.

In the case of a WLAN client device operating in the 5 GHz band, for example, an IEEE 802.11 a client device, at 216, the client device may passively scan channels in the 5 GHz band that are valid in the regulatory domain and may refrain from passively scanning channels in the 5 GHz band that are not valid in the regulatory domain. By determining the WLAN regulatory domain using the information received via the other wireless communication interface, the client device may avoid passive scanning on channels where there are no APs.

Although it is possible that a cellular carrier spans multiple countries with different regulatory domain requirements, most of the time the MCC is checked, it will not be different from that last time the client device roamed from one cell to another or from the last time the WLAN radio was turned off. Accordingly, the client device may cache the MCC at 208, if it differs from the MCC currently cached by the client device. The check of whether the MCC received at 204 differs from the MCC currently cached by the client device may be done at 206.

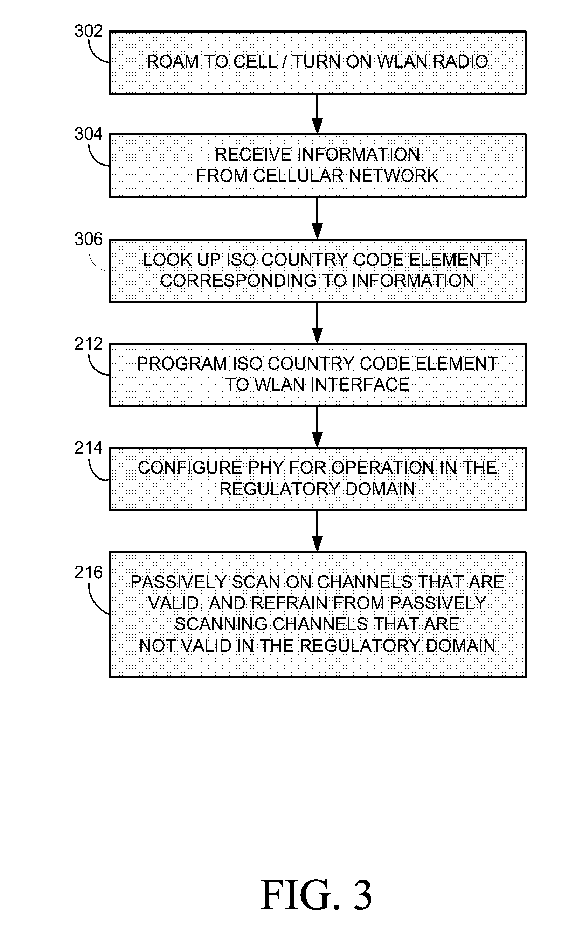

FIG. 3 is a flowchart of another exemplary method for determining how to scan for wireless local area networks. This method may be implemented in a WLAN client device equipped with a cellular communications interface. At 302, the device roams to a cell of a cellular network, or while in a cell of a cellular network, the device's WLAN radio is turned on. At 304, the device receives information from a base station of the cellular network. The WLAN regulatory domain in which the client device is located may be determined from this information. For example, this other information may be a geographical location of the base station, or a cell ID. At 306, the device looks up the International Organization of Standardization (ISO) country code corresponding to the information received at 304. A lookup table linking such information to ISO country code elements may be stored in the device's memory. The method then continues from 212 as described hereinabove with respect to FIG. 2.

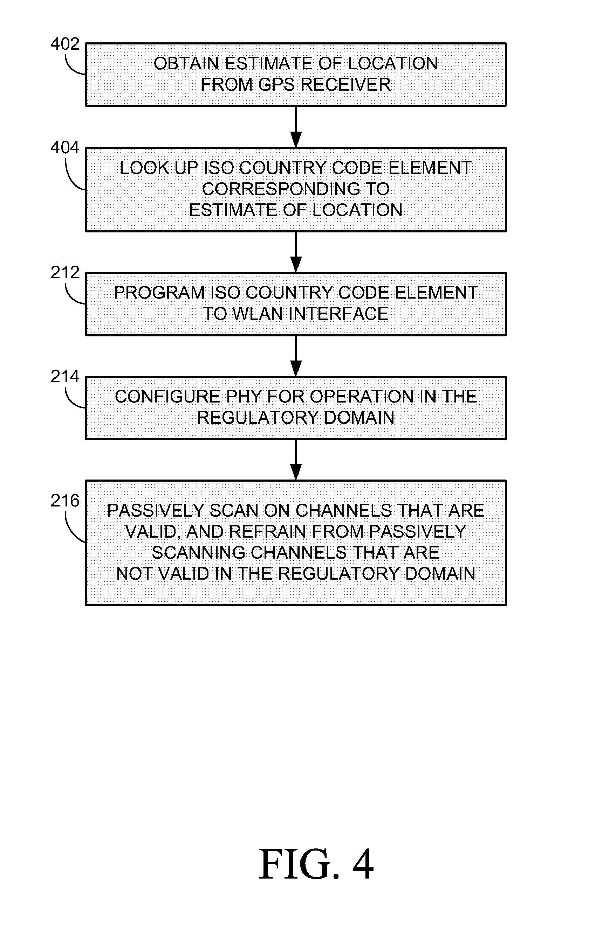

FIG. 4 is a flowchart of yet another exemplary method for determining how to scan for wireless local area networks. This method may be implemented in a WLAN client device equipped with a GPS receiver. At 402, the device obtains an estimate of its location from the GPS receiver. The estimate may be given as latitude and longitude coordinates, or may be processed information such as a country name, state or province, postal code, etc. At 404, the device looks up the ISO country code element corresponding to the estimated location. A lookup table linking such information to ISO country code elements may be stored in the device's memory. The method then continues from 212 as described hereinabove with respect to FIG. 2.

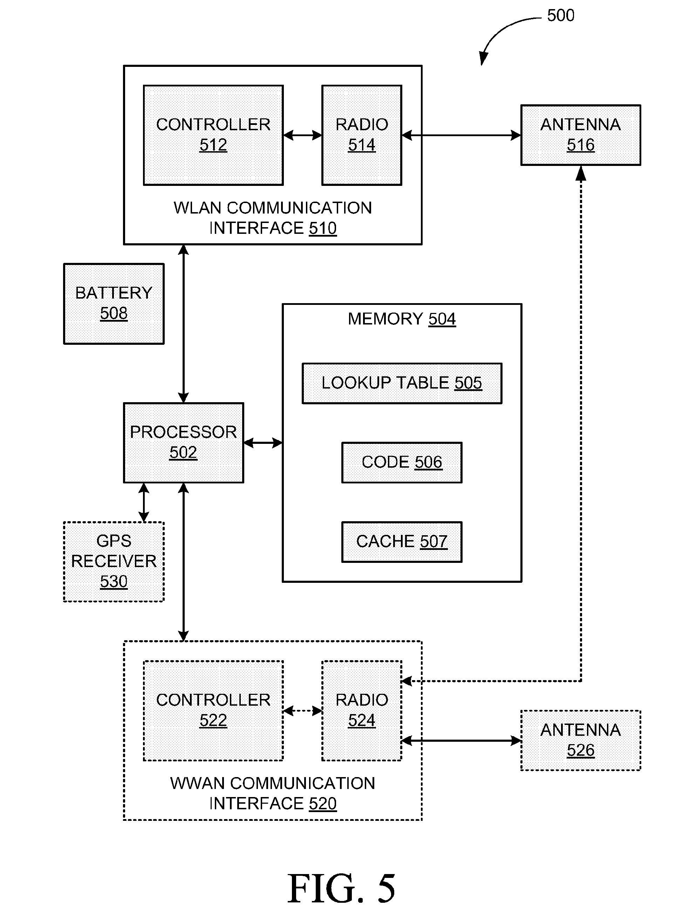

FIG. 5 is a block diagram of an exemplary WLAN client device. A client device 500 comprises a processor 502, and a memory 504 coupled to processor 502.

Memory 504 stores code 506 that, when executed by processor 502, may implement the methods described herein together with WLAN controller 512. Memory 504 may also store one or more lookup tables 505 as described hereinabove. Memory 504 may also comprise a cache 507 to store a most recently detected MCC.

Client device 500 comprises a battery 508 to power the other elements of the device.

Client device 500 comprises a wireless communication interface 510, compatible with one or more WLAN standards, for example, one or more standards of the family of IEEE 802.11 wireless communication standards or one of the HiperLAN standards. Wireless communication interface 510 is coupled to processor 502 and includes at least a WLAN controller 512 and a radio 514. Client device 500 also comprises an antenna 516 coupled to radio 514.

Client device 500 may optionally comprise a wireless communication interface 520, compatible with one or more WWAN standards, for example, a cellular communications standard. Wireless communication interface 520 is coupled to processor 502 and includes at least a baseband controller 522 and a radio 524. Client device 500 may also comprise an antenna 526 coupled to radio 524. Alternatively, WWAN communication interface 520 may share antenna 516 with WLAN communication interface 510.

Client device 500 may optionally comprise a GPS receiver 530 coupled to processor 502.

Client device 500 includes other components that, for clarity, are not shown in Figure 5. A non-exhaustive list of examples for client device 500 includes a wireless-enabled laptop computer, a wireless-enabled tablet computer, a wireless-enabled cellphone, a wireless-enabled personal digital assistant (PDA), a wireless-enabled smart phone, a wireless-enabled video camera/monitor, a wireless-enabled gaming/multimedia console, a wireless-enabled sensor/reporting/storage device, a wireless Internet Protocol (IP) phone and any other suitable WLAN client device.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A wireless device (110, 500) comprising:
a processor (502);
a wireless local area network (WLAN) interface (510) coupled to the processor (502);
another wireless interface (520, 530) coupled to the processor (502); and
a memory (504) arranged to store executable code means (506) which, when executed by the processor (502), is arranged to determine a WLAN regulatory domain (102, 104) in which the device (110, 500) is currently located using information received via the other wireless interface (520, 530), and which is arranged to control the WLAN interface (510) to passively scan for wireless local area networks on channels in the 5 GHz band that are valid in the WLAN regulatory domain (102, 104) and to refrain from passively scanning for wireless local area networks on channels in the 5 GHz band that are not valid in the WLAN regulatory domain (102, 104).

2. The wireless device (110, 500) of claim 1, wherein the other wireless interface comprises a cellular communications interface (520), the information received via the cellular communications interface (520) comprises any of: a mobile country code, a geographical location of a cellular base station (112, 114); or a cellular identifier of a cellular base station (112, 114), and the executable code means (506), when executed by the processor (502), is further arranged to determine the WLAN regulatory domain (102, 104) by looking up an International Organization of Standardization 'ISO' country code element corresponding to the mobile country code, the geographical location or the cellular identifier.

3. The wireless device (110, 500) of claim 1, wherein the other wireless interface comprises a global positioning system (GPS) receiver (530), the information received via the GPS receiver (530) comprises an estimated location of the device (110, 500), and the executable code means (506), when executed by the processor (102), is further arranged to determine the WLAN regulatory domain by looking up an International Organization of Standardization 'ISO' country code element corresponding to the estimated location.

4. A method for use in a wireless device (110, 500) having a wireless local area network (WLAN) interface (510) and another wireless network interface (520, 530), the method comprising:
using information received via the other wireless network interface (520, 530) to determine a WLAN regulatory domain (102, 104) in which the device (110, 500) is currently located;
passively scanning for wireless local area networks on channels in the 5 GHz band that are valid in the WLAN regulatory domain (102, 104); and
refraining from passively scanning for wireless local area networks on channels in the 5 GHz band that are not valid in the WLAN regulatory domain (102, 104).

5. The method of claim 4, wherein the other wireless network interface comprises a cellular communications interface (520), the method further comprising:
obtaining any of: a mobile country code from cellular network signals, a geographical location of a cellular base station (112, 114) from cellular network signals; or a cellular identifier of a cellular base station (112, 114) from cellular network signals,
wherein using the information to determine the WLAN regulatory domain (102, 104) comprises looking up the International Organization of Standardization 'ISO' country code element that corresponds to the mobile country code, the geographical location or the cellular identifier, and
wherein scanning for wireless local area networks on the channels comprises programming the ISO country code element to the WLAN interface (510).

6. The method of claim 4, wherein the other wireless network interface comprises a global positioning system (GPS) receiver (530), the method further comprising:
estimating a current location of the device (110, 500) from signals received at the GPS receiver (530),
wherein using the information to determine the WLAN regulatory domain (102, 104) comprises looking up the International Organization of Standardization 'ISO' country code element that corresponds to the estimated location, and wherein scanning for wireless local area networks on the channels comprises programming the ISO country code element to the WLAN interface (510).

7. A computer program product comprising instructions which when executed by a processor (502) of a wireless device (110, 500) having a wireless local area network (WLAN) interface (510) and another wireless network interface (520, 530), result in the wireless device (110, 500) performing the method of any one of claims 4 to 6.

## Amended claims

### Amended claims in accordance with Rule 137(2) EPC.

**1.** A wireless device (110, 500) comprising:
a processor (502);
a wireless local area network (WLAN) interface (510) coupled to the processor (502);
another wireless interface (520, 530) coupled to the processor (502); and
a memory (504) storing executable code means (506) which, when executed by the processor (502), is arranged to determine a WLAN regulatory domain (102, 104) in which the device (110, 500) is currently located using information received via the other wireless interface (520, 530), and which is arranged to control the WLAN interface (510) to passively scan for wireless local area networks on channels in the 5 GHz band that are valid in the WLAN regulatory domain (102, 104) and to refrain from passively scanning for wireless local area networks on channels in the 5 GHz band that are not valid in the WLAN regulatory domain (102, 104).

**2.** The wireless device (110, 500) of claim 1, wherein the other wireless interface comprises a cellular communications interface (520), the information received via the cellular communications interface (520) comprises any of: a mobile country code, a geographical location of a cellular base station (112, 114) or a cellular identifier of a cellular base station (112, 114); and the executable code means (506), when executed by the processor (502), is further arranged to determine the WLAN regulatory domain (102, 104) by looking up an International Organization of Standardization 'ISO' country code element corresponding to the mobile country code, the geographical location or the cellular identifier.

**3.** The wireless device (110, 500) of claim 1, wherein the other wireless interface comprises a global positioning system (GPS) receiver (530), the information received via the GPS receiver (530) comprises an estimated location of the device (110, 500), and the executable code means (506), when executed by the processor (102), is further arranged to determine the WLAN regulatory domain by looking up an International Organization of Standardization 'ISO' country code element corresponding to the estimated location.

**4.** A method for use in a wireless device (110, 500) having a wireless local area network (WLAN) interface (510) and another wireless network interface (520, 530), the method comprising:
using information received via the other wireless network interface (520, 530) to determine a WLAN regulatory domain (102, 104) in which the device (110, 500) is currently located;
passively scanning for wireless local area networks on channels in the 5 GHz band that are valid in the WLAN regulatory domain (102, 104); and
refraining from passively scanning for wireless local area networks on channels in the 5 GHz band that are not valid in the WLAN regulatory domain (102, 104).

**5.** The method of claim 4, wherein the other wireless network interface comprises a cellular communications interface (520), the method further comprising:
obtaining any of: a mobile country code from cellular network signals, a geographical location of a cellular base station (112, 114) from cellular network signals or a cellular identifier of a cellular base station (112, 114) from cellular network signals,
wherein using the information to determine the WLAN regulatory domain (102, 104) comprises looking up the International Organization of Standardization 'ISO' country code element that corresponds to the mobile country code, the geographical location or the cellular identifier, and
wherein scanning for wireless local area networks on the channels comprises programming the ISO country code element to the WLAN interface (510).

**6.** The method of claim 4, wherein the other wireless network interface comprises a global positioning system (GPS) receiver (530), the method further comprising:
estimating a current location of the device (110, 500) from signals received at the GPS receiver (530),
wherein using the information to determine the WLAN regulatory domain (102, 104) comprises looking up the International Organization of Standardization 'ISO' country code element that corresponds to the estimated location, and wherein scanning for wireless local area networks on the channels comprises programming the ISO country code element to the WLAN interface (510).

**7.** A computer program product comprising instructions which when executed by a processor (502) of a wireless device (110, 500) having a wireless local area network (WLAN) interface (510) and another wireless network interface (520, 530), result in the wireless device (110, 500) performing the method of any one of claims 4 to 6.
